# EUROPÄISCHE PATENTANMELDUNG

(11) **EP 1 900 426 A2**
(43) Veröffentlichungstag der Anmeldung: **19.03.2008**
(21) Anmeldenummer: 07123088.2
(22) Anmeldetag: 06.02.2004
(51) Int. Cl.: B01J 13/00

(54) **Chemomechanisch oberflächenmodifizierte Partikel und deren Herstellung**

(30) Priorität: 06.02.2003 DE 10304849
(62) Teilanmeldung aus: 04708754.9
(71) Anmelder: Bühler PARTEC GmbH, 66123 Saarbrücken (DE)
(72) Erfinder: Adam, Jens, 66130 Saarbrücken (DE); Gossmann, Kai, 66128 Saarbrücken (DE); Schmidt, Helmut, 66130 Saarbrücken (DE); Schmitt, Karl-Peter, 57520 Grosbliederstrof (FR); Tabellion, Frank, 66121 Saarbrücken (DE)
(74) Vertreter: Frommhold, Joachim

(57) **Zusammenfassung**

Beschrieben wird ein Verfahren zur chemomechanischen Oberflächenmodifizierung von Partikeln, bei dem Partikel in einem Dispergiermittel in Anwesenheit eines Modifizierungsmittels einer mechanischen Beanspruchung ausgesetzt werden, wobei das Modifizierungsmittel zumindest teilweise an die mechanisch beanspruchten Partikel chemisch gebunden wird.

## Beschreibung

Die vorliegende Erfindung betrifft chemomechanisch oberflächenmodifizierte Partikel und ein Verfahren zu deren Herstellung.

Kolloide sind seit langem bekannt. Sie können z.B. über Sol-Gel-Techniken oder über natürliche Prozesse, wie z.B. in Gewässern und bei Kondensationsprozessen in der Gasphase, entstehen. Für solche Kolloide ist typisch, dass sie in wässriger Lösung nur dann stabil sind, wenn sie über stabilisierende Faktoren an einer Aggregation gehindert werden. Eine Aggregation kann durch Wechselwirkungen der Kolloidpartikel untereinander, z.B. über van-der-Waals-Kräfte, Wasserstoffbrücken, hydrophobe Wechselwirkungen, Dipol-Dipol-Wechselwirkungen oder chemische Bindungen verursacht werden. Wegen der ausserordentlich grossen Oberfläche ist die Tendenz zur Aggregation besonders gross. Kolloidale Partikel haben gewöhnlich Abmessungen von nicht mehr als 0,2 µm.

Die Stabilisierung von Kolloiden geschieht in der Regel durch ein entsprechendes Zeta-Potential, d.h. die Ausbildung einer Doppelladungswolke um die Kolloide herum. Dies kann bedingt sein durch unterschiedliche Austrittsarbeit oder durch eine Beladung der Partikel mit Ionen oder Elektronen, z.B. durch Einstellung des pH-Wertes. Sie kann aber auch durch Anlagerung bestimmter Moleküle an die Oberfläche erfolgen, z.B. durch die Anlagerung von Huminsäuren in natürlichen Gewässern. Alle diese Prozesse setzen jedoch voraus, dass die Kolloide durch eine vorausgegangene Reaktion erzeugt worden sind und sich in der Umgebung des Kolloids Bedingungen eingestellt haben, die zu einer derartigen Stabilisierung führen.

Andere Methoden zur Herstellung von kleinen Teilchen, z.B. das hochenergetische Mahlen, führen zwar zu einer Zertrümmerung der Kristallstruktur bis hinab zu nanoskaligen Abmessungen, können aber die anschliessende Aggregation nicht verhindern. Solche aggregierten Teilchen, wie sie auch zum Teil durch die gezielte Kondensation aus Gasphasen hergestellt werden, können nur unter ganz bestimmten Umständen deaggregiert werden. So ist es z.B. gelungen, Metallpartikel in Ölen zu dispergieren, weil sich das Öl zwischen schwach wechselwirkende Metalloberflächen schieben kann. Schwach wechselwirkende Metalloberflächen werden aber nur erhalten, wenn die Metallpartikel im Hochvakuum, d.h. unter ultrareinen Bedingungen, hergestellt werden, so dass keine Oxidoberfläche gebildet wird. Wenn dies nicht der Fall ist, lassen sich die Teilchen praktisch nicht mehr dispergieren. Daher ist bei den vorher genannten hochenergetischen Mahlprozessen eine Redispergierung auf Primärkristallitgrösse nicht mehr möglich.

Wie vorstehend für in Öl redispergierbare Metallpartikel gezeigt, gelingt es nur in Ausnahmefällen, solche Systeme prozesstechnisch zu beherrschen. Zur gezielten prozesstechnischen Beherrschbarkeit ist ein Verfahren erforderlich, das die Kolloidpartikel bei der Herstellung so einstellt, dass sie den jeweiligen prozesstechnischen Anforderungen gerecht werden. So soll es möglich sein, die Kolloidpartikel bei der Herstellung mit den gewünschten Eigenschaften bzw. Funktionen zu versehen. Beispielsweise soll es möglich sein, die Kolloidpartikel im Hinblick auf die Umgebung zu stabilisieren, zu kompatibilisieren, zu inertisieren oder zu reaktivieren.

Mit handelsüblichen Mahlaggregaten lassen sich gewöhnlich nur Partikel im Submikrometer-Bereich erhalten und das auch nur mit sogenannten Mahlhilfsmitteln, die verhindern, dass frisch erzeugte Bruchflächen wieder rekombinieren. Eine Zerkleinerung auf Kolloidgrösse und insbesondere auf einen Bereich von 0,002 bis 0,05 µm ist im allgemeinen nicht möglich.

Die erfindungsgemässe Aufgabe bestand nun darin, Kolloide herzustellen, die eine ausgezeichnete Stabilität gegen Aggregation aufweisen, wobei die Kolloidpartikel ausgesprochen klein (bevorzugt unter 0,2 µm, insbesondere unter 0,05 µm) sein können und die Eigenschaften bzw. Funktionen des Kolloids bzw. der Kolloidpartikel an die jeweiligen Anforderungen angepasst werden können. Die erfindungsgemässe Aufgabe konnte überraschenderweise dadurch gelöst werden, dass über einen chemomechanischen Reaktivzerkleinerungsprozess eine Funktionalisierung und gleichzeitig eine Stabilisierung gegen Aggregierung der erhaltenen Kolloidpartikel erzielt wird.

Demgemäss stellt die vorliegende Erfindung ein Verfahren zur chemomechanischen Oberflächenmodifizierung von Partikeln bereit, bei dem Partikel in einem Dispergiermittel in Anwesenheit eines Modifizierungsmittels zur Zerkleinerung Scherkräften ausgesetzt werden, wobei das Modifizierungsmittel zumindest teilweise an die gescherten Partikel chemisch gebunden wird.

Nach der Erfindung werden in Mühlenaggregaten oder anderen Dispergieraggregaten aus Partikeln durch den Einsatz von im allgemeinen niedermolekularen Modifizierungsmitteln, die eine chemische Bindung mit den Partikeln eingehen können, Funktionskolloide gebildet, die fest mit der Oberfläche der Partikel verbundene Molekülreste des Modifizierungsmittels als Funktionsgruppen aufweisen, wobei die mittlere kleinste Dimension der funktionalisierten Partikel nach Bedarf bis hinunter in den Bereich von 0,01 und sogar 0,002 µm reichen kann. Durch das erfindungsgemässe Verfahren wird es möglich, stabile Kolloide mit mittleren kleinsten Dimensionen von bevorzugt nicht mehr als 0,2 µm aus grobkörnigeren Partikeln zu erhalten. Durch die Modifizierung der Kolloidpartikel mit vergleichsweise kleinen Molekülen, die rasch an die neu gebildeten Oberflächen diffundieren können, wird eine Aggregation verhindert oder gehemmt und gleichzeitig eine an die jeweiligen Anforderungen angepasste Funktionalisierung des Kolloids bzw. der Kolloidpartikel erreicht.

Bei den eingesetzten Partikeln handelt es sich um feste Partikel bzw. Feststoffteilchen aus jedem beliebigen geeigneten Material. Es kann sich z.B. um organische (auch polymere) oder anorganische Partikel handeln, wobei anorganische bevorzugt sind. Beispiele für anorganische Partikel sind Partikel aus einem Element, einer Legierung oder einer Elementverbindung. Die anorganischen Partikel bestehen vorzugsweise aus Metallen, Legierungen und insbesondere aus Metallverbindungen und Verbindungen von Halbleiterelementen, z.B. Si oder Ge, oder Bor.

Beispiele für Partikel aus einem Element sind Partikel aus Kohlenstoff, wie Russ oder Aktivkohle, aus einem Halbleiter, wie Silicium (einschliesslich technischem Si, Ferrosilicium und Reinsilicium) oder Germanium, oder einem Metall, wie z.B. Eisen (auch Stahl), Chrom, Zinn, Kupfer, Aluminium, Titan, Gold und Zink. Beispiele für Partikel aus einer Legierung können Partikel aus Bronze oder Messing sein.

Beispiele für die bevorzugten Metallverbindungen und Verbindungen von Halbleiterelementen oder Bor sind (gegebenenfalls hydratisierte) Oxide, wie ZnO, CdO, SiO₂ GeO₂, TiO₂ ZrO₂, CeO₂, SnO₂, Al₂O₃ (in allen Modifikationen, insbesondere als Korund, Böhmit, AIO(OH), auch als Aluminiumhydroxid), In₂O₃, La₂O₃, Fe₂O₃, Cu₂O, Ta₂O₅, Nb₂O₅ V₂O₅, MoO₃ oder WO₃, entsprechende Mischoxide, z.B. Indium-Zinn-Oxid (ITO), Antimon-Zinn-Oxid (ATO), fluor-dotiertes Zinnoxid (FTO) und solche mit Perowskitstruktur, wie BaTiO₃ und PbTiO₃, Chalkogenide, wie beispielsweise Sulfide (z.B. CdS, ZnS, PbS und Ag₂S), Selenide (z.B. GaSe, CdSe und ZnSe) und Telluride (z.B. ZnTe oder CdTe), Halogenide, wie AgCl, AgBr, Agl, CuCl, CuBr, Cdl₂ und Pbl₂, Carbide, wie CdC₂ oder SiC, Silicide, wie MoSi₂, Arsenide, wie AlAs, GaAs und GeAs, Antimonide, wie InSb, Nitride, wie BN, AIN, Si₃N₄ und Ti₃N₄, Phosphide, wie GaP, InP, Zn₃P₂ und Cd₃P₂, sowie Carbonate, Sulfate, Phosphate, Silicate, Zirconate, Aluminate und Stannate von Elementen, insbesondere von Metallen oder Si, z.B. Carbonate von Calcium und/oder Magnesium, Silicate, wie Alkalisilicate, Talkum, Tone (Kaolin) oder Glimmer, und Sulfate von Barium oder Calcium. Weitere Beispiele für zweckmässige Partikel sind ferner Magnetit, Maghemit, Spinelle (z.B. MgO·Al₂O₃), Mullit, Eskolait, Tialit, SiO₂·TiO₂, oder Biokeramiken, z.B. Calciumphosphat und Hydroxyapatit. Es kann sich um Partikel aus Glas oder Keramik handeln.

Es kann sich dabei z.B. um Partikel handeln, die gewöhnlich für die Herstellung von Glas (z. B. Borosilicatglas, Natronkalkglas oder Kieselglas), Glaskeramik oder Keramik (z.B. auf Basis der Oxide SiO₂, BeO, Al₂O₃, ZrO₂ oder MgO oder der entsprechenden Mischoxide, Elektro- und Magnetokeramik, wie Titanate und Ferrite, oder Nichtoxidkeramiken, wie Siliciumnitrid, Siliciumcarbid, Bornitrid oder Borcarbid) verwendet werden. Es kann sich auch um Partikel handeln, die als Füllstoffe oder Pigmente dienen. Technisch wichtige Füllstoffe sind z.B. Füllstoffe auf Basis von SiO₂, wie Quarz, Cristobalit, Tripolit, Novaculit, Kieselgur, Kieselerde, pyrogene Kieselsäuren, Fällungskieselsäuren und Kieselgele, Silicate, wie Talkum, Pyrophyllit, Kaolin, Glimmer, Muskovit, Phlogopit, Vermiculit, Wollastonit und Perlite, Carbonate, wie Calcite, Dolomite, Kreide und synthetische Calciumcarbonate, Russ, Sulfate, wie Schwerspat und Leichtspat, Eisenglimmer, Gläser, Aluminiumhydroxide, Aluminiumoxide und Titandioxid.

Es können auch Mischungen dieser Partikel verwendet werden. Besonders bevorzugte Materialien für die Partikel sind Metalloxide, Siliciumoxide und Silicate, insbesondere Talkum, ZrO₂, Al₂O₃, TiO₂ und SiO₂ oder Mischungen davon.

Die Herstellung der erfindungsgemäss eingesetzten Partikel kann auf übliche Weise erfolgen, z.B. durch Flammpyrolyse, Plasmaverfahren, Gasphasenkondensationsverfahren, Kolloidtechniken, Präzipitationsverfahren, Sol-Gel-Prozesse, kontrollierte Nukleations- und Wachstumsprozesse, MOCVD-Verfahren und (Mikro)emulsions-verfahren. Diese Verfahren sind in der Literatur ausführlich beschrieben. Insbesondere können z.B. Metalle (beispielsweise nach der Reduktion der Fällungsverfahren), keramische oxidische Systeme (durch Ausfällung aus Lösung), aber auch salzartige Systeme oder Mehrkomponentensysteme herangezogen werden.

Die verwendbaren Partikel sind im allgemeinen häufig auch im Handel erhältlich. Beispiele für SiO₂-Teilchen sind handelsübliche Kieselsäureprodukte, z.B. Kieselsole, wie die Levasile®, Kieselsole der Bayer AG, oder pyrogene Kieselsäuren, z.B. die Aerosil-Produkte von Degussa. Selbstverständlich können auch alle als Füllstoffe eingesetzten Partikel gewöhnlich im Handel erhalten werden.

Die Partikel können in Form eines Pulvers oder direkt als Dispersion in einem Dispergiermittel verwendet werden. Die Partikel können auch im Dispergiermittel durch Ausfällung einer gelösten Vorstufe in situ erhalten werden.

Die Partikelgrösse der eingesetzten Partikel ist im allgemeinen grösser als die der durch das erfindungsgemässe Verfahren erhaltenen Kolloidpartikel. Obwohl die Partikelgrösse der eingesetzten Partikel beliebig gewählt werden kann, sind Partikel mit einem mittleren Partikeldurchmesser von weniger als 100 µm, bevorzugt weniger als 10 µm, und einem mittleren Partikeldurchmesser von mehr als 0,001 µm, bevorzugt mehr als 0,01 µm, zweckmässig.

Als Dispergiermittel kann jedes beliebige Lösungsmittel verwendet werden, sofern es die zu behandelnden Partikel nicht oder im wesentlichen nicht löst und auch gegenüber dem verwendeten Modifizierungsmittel inert oder im wesentlichen inert ist. Das geeignete Dispergiermittel wird in Abhängigkeit von den zu behandelnden Partikeln bevorzugt aus Wasser oder organischen Lösungsmitteln ausgewählt, denkbar sind aber auch anorganische Lösungsmittel, wie z.B. Schwefelkohlenstoff.

Ein besonders bevorzugtes Dispergiermittel ist Wasser, insbesondere entionisiertes Wasser. Als organische Dispergiermittel eignen sich sowohl polare als auch unpolare und aprotische Lösungsmittel. Beispiele hierfür sind Alkohole, wie z.B. aliphatische und alicyclische Alkohole mit 1 bis 8 Kohlenstoffatomen (insbesondere Methanol, Ethanol, n- und i-Propanol, Butanol, Octanol, Cyclohexanol), Ketone, wie z.B. aliphatische und alicyclische Ketone mit 1 bis 8 Kohlenstoffatomen (insbesondere Aceton, Butanon und Cyclohexanon), Ester, wie z.B. Essigsäureethylester und Glycolester, Ether, wie z.B. Diethylether, Dibutylether, Anisol, Dioxan, Tetrahydrofuran und Tetrahydropyran, Glycolether, wie Mono-, Di-, Tri- und Polyglycolether, Glycole, wie Ethylenglycol, Diethylenglycol und Propylenglycol, Amide und andere Stickstoffverbindungen, wie z.B. Dimethylacetamid, Dimethylformamid, Pyridin, N-Methylpyrrolidin und Acetonitril, Sulfoxide und Sulfone, wie z.B. Sulfolan und Dimethylsulfoxid, Nitroverbindungen, wie Nitrobenzol, Halogenkohlenwasserstoffe, wie Dichlormethan, Chloroform, Tetrachlorkohlenstoff, Tri-, Tetrachlorethen, Ethylenchlorid, Chlorfluorkohlenstoffe, aliphatische, alicyclische oder aromatische Kohlenwasserstoffe, z.B. mit 5 bis 15 Kohlenstoffatomen, wie z.B. Pentan, Hexan, Heptan und Octan, Cyclohexan, Benzine, Petrolether, Methylcyclohexan, Dekalin, Terpen-Lösungsmittel, Benzol, Toluol und Xylole. Selbstverständlich können auch Mischungen derartiger Dispergiermittel eingesetzt werden.

Bevorzugt eingesetzte organische Dispergiermittel sind aliphatische und alicyclische Alkohole, wie Ethanol, n- und i-Propanol, Glycole wie Ethylenglycol, und aliphatische, alicyclische und aromatische Kohlenwasserstoffe, wie Hexan, Heptan, Toluol und o-, m- und p-Xylol. Besonders bevorzugte Dispergiermittel sind Ethanol und Toluol.

Die Partikel werden in dem Dispergiermittel unter Anwesenheit eines Modifizierungsmittels mechanisch reaktivzerkleinert, d.h., bei der mechanischen Zerkleinerung findet eine chemische Bindung des Modifizierungsmittels an das Partikel bzw. das zerkleinerte Partikel durch eine chemische Reaktion statt. Eine solche Reaktion unter mechanischer Beanspruchung wird auch als chemomechanische Reaktion bezeichnet. Dem Fachmann ist bekannt, dass sich auf der Oberfläche von Partikeln gewöhnlich Gruppen befinden, die in dieser Form im Inneren der Partikel nicht zu finden sind. Gewöhnlich handelt es sich bei diesen Oberflächengruppen um funktionelle Gruppen, die im allgemeinen relativ reaktionsfähig sind. Beispielsweise befinden sich auf solchen Partikeln als Oberflächengruppen Restvalenzen, wie Hydroxygruppen und Oxygruppen, z.B. bei Metalloxidpartikeln, oder Thiolgruppen und Thiogruppen, z.B. bei Metallsulfiden, oder Amino-, Amid- und Imidgruppen, z.B. bei Nitriden.

Das Modifizierungsmittel weist insbesondere mindestens eine funktionelle Gruppe auf, die zumindest unter den Bedingungen der mechanischen Zerkleinerung eine chemische Bindung mit den Oberflächengruppen der Partikel eingehen kann. Bei der chemischen Bindung handelt es sich bevorzugt um eine kovalente, ionische oder eine koordinative Bindung zwischen dem Modifizierungsmittel und dem Partikel, aber auch um Wasserstoffbrückenbindungen. Unter einer koordinativen Bindung wird eine Komplexbildung verstanden. So kann zwischen den funktionellen Gruppen des Modifizierungsmittels und dem Partikel z.B. eine Säure/Base-Reaktion nach Brönsted oder Lewis, eine Komplexbildung oder eine Veresterung stattfinden.

Bei der funktionellen Gruppe, die das Modifizierungsmittel umfasst, handelt es sich vorzugsweise um Carbonsäuregruppen, Säurechloridgruppen, Estergruppen, Nitril- und Isonitrilgruppen, OH-Gruppen, SH-Gruppen, Epoxidgruppen, Anhydridgruppen, Säureamidgruppen, primäre, sekundäre und tertiäre Aminogruppen, Si-OH-Gruppen, hydrolysierbare Reste von Silanen (nachstehend erläuterte Gruppen Si-OR) oder C-H-acide Gruppierungen, wie in ss-Dicarbonylverbindungen.

Das Modifizierungsmittel kann auch mehr als eine derartige funktionelle Gruppe umfassen, wie z.B. in Betainen, Aminosäuren, EDTA.

Bei einer Variante des erfindungsgemässen Verfahrens kann das eingesetzte Modifizierungsmittel auch gleichzeitig als Dispergiermittel fungieren, so dass für beide die gleiche Verbindung eingesetzt werden kann.

Die Modifizierungsmittel sind keine Tenside. Das bedeutet, dass das Modifizierungsmittel in dem als Dispergiermittel verwendeten Lösungsmittel nicht in der Lage ist, Micellen zu bilden, auch wenn es in hohen Konzentrationen eingesetzt wird. Das erfindungsgemäss verwendete Modifizierungsmittel, das von einem Tensid verschieden ist, löst sich in dem als Dispergiermittel verwendeten Lösungsmittel homogen. Die Modifizierungsmittel liegen dann als diskrete Moleküle oder Molekülionen homogen verteilt in der Lösung vor. Dagegen reichern sich Tenside in einem Lösungsmittel bei niedriger Konzentration an einer Grenzfläche an und setzen die Grenzflächenspannung herab und bilden bei grösserer Konzentration Micellen, sind also heterogen verteilt. Die vorstehenden Angaben beziehen sich auf das Verhalten im reinen Dispergiermittel. Bei Anwesenheit der Partikel gehen die Modifizierungsmittel naturgemäss auch die erfindungsgemäss beschriebenen chemischen Wechselwirkungen mit den Partikeln ein.

Während die Modifizierungsmittel wie vorstehend angegeben zumindest zum Teil kovalente, ionische oder koordinative chemische Bindungen mit den Oberflächengruppen der Partikel eingehen, sind die Wechselwirkungen von Tensiden im allgemeinen unspezifischer, z.B. handelt es sich typischerweise um Adsorptions- oder Benetzungswechselwirkungen.

Neben der mindestens einen funktionellen Gruppe, die mit der Oberflächengruppe des Partikels eine chemische Bindung eingehen kann, weist das Modifizierungsmittel im allgemeinen einen Molekülrest auf, der nach Verknüpfung des Modifizierungsmittels über die funktionelle Gruppe die Eigenschaften des Partikels modifiziert. Der Molekülrest oder ein Teil davon kann z.B. hydrophob oder hydrophil sein oder eine zweite funktionelle Gruppe tragen, um auf diese Weise die Kolloidpartikel im Hinblick auf die Umgebung zu funktionalisieren, d.h., z.B. zu stabilisieren, kompatibilisieren, inertisieren oder reaktivieren. Auf diese Weise werden die erfindungsgemäss erhaltenen Kolloidpartikel durch diesen Molekülrest mit einer Funktion bzw. Oberflächenfunktionalisierung versehen. In diesem Sinne handelt es sich bei den Kolloiden aus mit dem Modifizierungsmittel bzw. Oberflächenmodifizierungsmittel modifizierten Kolloidpartikeln um Funktionskolloide. Durch die Erfindung wird es möglich, dem gewünschten Verwendungszweck angepasste Funktionskolloide zu erhalten. Als Prinzipien für die Ankopplung an die Partikel können je nach System kovalente Bindungen, ionische Bindungen und Komplexbindungen vorliegen, aber auch Wasserstoffbrückenbindungen sind geeignet.

Bei hydrophoben Molekülresten kann es sich z.B. um Alkyl, Aryl, Alkaryl, Aralkyl oder Fluor-haltigen Alkylgruppen handeln, die bei geeigneter Umgebung zur Inertisierung oder Abstossung führen können. Beispiele für hydrophile Gruppen wären Hydroxy-, Alkoxy- oder Polyethergruppen. Bei der gegebenenfalls vorhandenen zweiten funktionellen Gruppe des Modifizierungsmittels kann es sich z.B. um eine saure, basische oder ionische Gruppe handeln. Es kann sich auch um eine für eine chemische Reaktion mit einem ausgewählten Reaktionspartner geeignete funktionelle Gruppe handeln. Die zweite funktionelle Gruppe kann die gleiche sein, die sich auch als funktionelle Gruppe zur Bindung an das Partikel eignet, so dass auf die dort genannten Beispiele verwiesen wird. Andere Beispiele für eine zweite funktionelle Gruppe wären Epoxid-, Acryloxy-, Methacryloxy-, Acrylat- oder Methacrylatgruppen. Es können zwei oder mehr gleiche oder verschiedene derartige funktionelle Gruppen vorhanden sein.

Das Modifizierungsmittel weist bevorzugt ein Molekulargewicht von nicht mehr als 500, bevorzugter nicht mehr als 400 und insbesondere nicht mehr als 200 auf. Die Verbindungen sind vorzugsweise unter Normalbedingungen flüssig. Die funktionellen Gruppen, die diese Verbindungen tragen, richten sich in erster Linie nach den Oberflächengruppen der Feststoffteilchen und der gewünschten Wechselwirkung mit der Umgebung. Das Molekulargewicht spielt auch für die Diffusion an die frisch gebildeten Teilchenoberflächen eine wichtige Rolle. Kleine Moleküle führen zu einer raschen Belegung der Oberfläche und vermindern so die Rekombination.

Demgemäss sind Beispiele für geeignete Modifizierungsmittel gesättigte oder ungesättigte Mono- und Polycarbonsäuren, die entsprechenden Säureanhydride, Säurechloride, Ester und Säureamide, Aminosäuren, Imine, Nitrile, Isonitrile, Epoxyverbindungen, Mono- und Polyamine, ss-Dicarbonylverbindungen, Silane und Metallverbindungen, die über eine funktionelle Gruppe verfügen, die mit den Oberflächengruppen der Partikel reagieren kann. Besonders bevorzugt eingesetzte Modifizierungsmittel sind Silane, Carbonsäuren, Aminosäuren und Amine. Die Kohlenstoffketten dieser Verbindungen können durch O-, S-, oder NH-Gruppen unterbrochen sein. Es können ein oder mehrere Modifizierungsmittel verwendet werden.

Bevorzugte gesättigte oder ungesättigte Mono- und Polycarbonsäuren (vorzugsweise Monocarbonsäuren) sind solche mit 1 bis 24 Kohlenstoffatomen, wie z.B. Ameisensäure, Essigsäure, Propionsäure, Buttersäure, Pentansäure, Hexansäure, Acrylsäure, Methacrylsäure, Crotonsäure, Citronensäure, Adipinsäure, Bernsteinsäure, Glutarsäure, Oxalsäure, Maleinsäure, Fumarsäure, Itaconsäure und Stearinsäure sowie die entsprechenden Säurenhydride, -chloride, -ester und -amide, z.B. Caprolactam. Von diesen vorstehend genannten Carbonsäuren sind auch jene umfasst, deren Kohlenstoffkette durch O-, S- oder NH-Gruppen unterbrochen sind. Besonders bevorzugt sind Ethercarbonsäuren wie Mono- und Polyethercarbonsäuren sowie die entsprechenden Säurenhydride, - chloride, -ester und -amide, z.B. Methoxyessigsäure, 3,6-Dioxaheptansäure und 3,6,9-Trioxadecansäure.

Beispiele für bevorzugte Mono- und Polyamine sind solche der allgemeinen Formel Q₃₋ₙNHₙ, worin n = 0, 1 oder 2 und die Reste Q unabhängig voneinander Alkyl mit 1 bis 12, insbesondere 1 bis 6 und besonders bevorzugt 1 bis 4 Kohlenstoffatomen, z.B. Methyl, Ethyl, n- und i-Propyl und Butyl, sowie Aryl, Alkaryl oder Aralkyl mit 6 bis 24 Kohlenstoffatomen, wie z.B. Phenyl, Naphthyl, Tolyl und Benzyl, darstellen, und Polyalkylenamine der allgemeinen Formel Y₂N(-Z-NY)_{y}-Y, worin Y unabhängig Q oder H ist, wobei Q wie vorstehend definiert ist, y eine ganze Zahl von 1 bis 6, vorzugsweise 1 bis 3, ist, und Z eine Alkylengruppe mit 1 bis 4, vorzugsweise 2 oder 3 Kohlenstoffatomen ist. Konkrete Beispiele sind Methylamin, Dimethylamin. Trimethylamin, Ethylamin, Anilin, N-Methylanilin, Diphenylamin, Triphenylamin, Toluidin, Ethylendiamin, Diethylentriamin.

Bevorzugte ss-Dicarbonylverbindungen sind solche mit 4 bis 12, insbesondere 5 bis 8 Kohlenstoffatomen, wie z.B. Diketone, wie Acetylaceton, 2,4-Hexandion, 3,5-Heptandion, Acetessigsäure, Acetessigsäure-C₁-C₄-alkylester, wie Acetessigsäureethylester, Diacetyl und Acetonylaceton.

Beispiele für Aminosäuren sind ss-Alanin, Glycin, Valin, Aminocapronsäure, Leucin und Isoleucin.

Bevorzugt eingesetzte Silane weisen mindestens eine nicht hydrolysierbare Gruppe oder eine Hydroxygruppe auf, besonders bevorzugt werden hydrolysierbare Organosilane eingesetzt, die zusätzlich mindestens einen nicht hydrolysierbaren Rest aufweisen. Bevorzugte Silane haben die allgemeine Formel (I)

RₐSiX₍₄₋ₐ₎ (I)

worin die Reste R gleich oder verschieden sind und nicht hydrolysierbare Gruppen darstellen, die Reste X gleich oder verschieden sind und hydrolysierbare Gruppen oder Hydroxygruppen bedeuten und a den Wert 1, 2 oder 3 hat. Der Wert a ist bevorzugt 1.

In der allgemeinen Formel (I) sind die hydrolysierbaren Gruppen X, die gleich oder voneinander verschieden sein können, beispielsweise Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen. Bevorzugte hydrolysierbare Reste sind Halogen, Alkoxygruppen und Acyloxygruppen. Besonders bevorzugte hydrolysierbare Reste sind C₁₋₄-Alkoxygruppen, insbesondere Methoxy und Ethoxy.

Bei den nicht hydrolysierbaren Resten R, die gleich oder voneinander verschieden sein können, kann es sich um nicht hydrolysierbare Reste R mit oder ohne eine funktionelle Gruppe handeln.

Der nicht hydrolysierbare Rest R ohne funktionelle Gruppe ist beispielsweise Alkyl (vorzugsweise C₁₋₈-Alkyl, wie Methyl, Ethyl, n-Propyl, Isopropyl, n-Butyl, sek.-Butyl und tert.-Butyl, Pentyl, Hexyl, Octyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl), Aryl (vorzugsweise C₆₋₁₀-Aryl, wie z.B. Phenyl und Naphthyl) sowie entsprechende Alkaryle und Aralkyle (z.B. Tolyl, Benzyl und Phenethyl). Die Reste R und X können gegebenenfalls einen oder mehrere übliche Substituenten, wie z.B. Halogen oder Alkoxy, aufweisen. Bevorzugt sind Alkyltrialkoxysilane. Beispiele sind:

CH₃SiCl₃, CH₃Si(OC₂H₅)₃, CH₃Si(OCH₃)₃, C₂H₅SiCl₃, C₂H₅Si(OC₂H₅)₃, C₂H₅Si(OCH₃)₃, C₃H₇Si(OC₂H₅)₃, (C₂H₅O)₃SiC₃H₆Cl, (CH₃)₂SiCl₂, (CH₃)₂Si(OC₂H₅)₂, (CH₃)₂Si(OH)₂, C₆H₅Si(OCH₃)₃, C₆H₅Si(OC₂H₅)₃, C₆H₅CH₂CH₂Si(OCH₃)₃, (C₆H₅)₂SiCl₂, (C₆H₅)₂Si(OC₂H₅)₂, (i-C₃H₇)₃SiOH, CH₂=CHSi(OOCCH₃)₃, CH₂=CHSiCl₃, CH₂=CH-Si(OC₂H₅)₃, CH₂=CHSi(OC₂H₅)₃, CH₂=CH-Si(OC₂H₄OCH₃)₃, CH₂=CH-CH₂-Si(OC₂H₅)₃, CH₂=CH-CH₂-Si(OC₂H₅)₃, CH₂=CH-CH₂-Si(OOCCH₃)₃, n-C₆H₁₃-CH₂-CH₂-Si(OC₂H₅)₃, und n-C₈H₁₇-CH₂-CH₂-Si(OC₂H₅)₃.

Der nicht hydrolysierbare Rest R mit einer funktionellen Gruppe kann z.B. als funktionelle Gruppe eine Epoxid- (z.B. Glycidyl- oder Glycidyloxy-), Hydroxy-, Ether-, Amino-, Monoalkylamino-, Dialkylamino-, gegebenenfalls substituierte Anilino-, Amid-, Carboxy-, Acryl-, Acryloxy-, Methacryl-, Methacryloxy-, Mercapto-, Cyano-, Alkoxy-, Isocyanato-, Aldehyd-, Alkylcarbonyl-, Säureanhydrid- und Phosphorsäuregruppe umfassen. Diese funktionellen Gruppen sind über Alkylen-, Alkenylen- oder Arylen-Brückengruppen, die durch Sauerstoff- oder -NH-Gruppen unterbrochen sein können, an das Siliciumatom gebunden. Die Brückengruppen enthalten vorzugsweise 1 bis 18, vorzugsweise 1 bis 8 und insbesondere 1 bis 6 Kohlenstoffatome.

Die genannten zweiwertigen Brückengruppen und gegebenenfalls vorliegende Substituenten, wie bei den Alkylaminogruppen, leiten sich z.B. von den oben genannten einwertigen Alkyl-, Alkenyl-, Aryl-, Alkaryl- oder Aralkylresten ab. Natürlich kann der Rest R auch mehr als eine funktionelle Gruppe aufweisen.

Bevorzugte Beispiele für nicht hydrolysierbare Reste R mit funktionellen Gruppen sind ein Glycidyl- oder ein Glycidyloxy-(C₁₋₂₀)-alkylen-Rest, wie β-Glycidyloxyethyl, γ-Glycidyloxypropyl, δ-Glycidyloxybutyl, ε-Glycidyloxypentyl, ω-Glycidyloxyhexyl, und 2-(3,4-Epoxycyclohexyl)ethyl, ein (Meth)acryloxy-(C₁₋₆)-alkylen-Rest, z.B. (Meth)acryl-oxymethyl, (Meth)acryloxyethyl, (Meth)acryloxypropyl oder (Meth)acryloxybutyl, und ein 3-Isocyanatopropylrest. Besonders bevorzugte Reste sind γ-Glycidyloxypropyl und (Meth)acryloxypropyl. ((Meth)acryl steht für Methacryl oder Acryl).

Konkrete Beispiele für entsprechende Silane sind γ-Glycidyloxypropyltrimethoxysilan (GPTS), γ-Glycidyloxypropyltriethoxysilan (GPTES), 3-Isocyanatopropyltriethoxysilan, 3-Isocyanatopropyldimethylchlorsilan, 3-Aminopropyltrimethoxysilan (APTS), 3-Aminopropyltriethoxysilan (APTES), N-(2-Aminoethyl)-3-aminoproyltrimethoxysilan, N-[N'-(2'-Aminoethyl)-2-aminoethyl]-3-aminopropyltrimethoxysilan, Hydroxymethyltriethoxysilan, 2-[Methoxy(polyethylenoxy)propyl]trimethoxysilan, Bis-(hydroxyethyl)-3-aminopropyltriethoxysilan, N-Hydroxyethyl-N-methylaminopropyltriethoxysilan, 3-(Meth)-acryloxypropyltriethoxysilan und 3-(Meth)acryloxypropyltrimethoxysilan.

Ferner ist auch der Einsatz von Silanen möglich, die zumindest teilweise organische Reste aufweisen, welche mit Fluor substituiert sind. Derartige Silane werden in der WO 92/21729 detailliert beschrieben. Hierfür können hydrolysierbare Silane mit mindestens einem nicht hydrolysierbaren Rest eingesetzt werden, die die allgemeine Formel

Rf(R)_{b}SiX_{(3-b)} (II)

aufweisen, worin X und R wie in Formel (I) definiert sind, Rf eine nicht hydrolysierbare Gruppe ist, die 1 bis 30 Fluoratome an Kohlenstoffatome gebunden aufweist, die vorzugsweise durch mindestens zwei Atome, vorzugsweise eine Ethylengruppe, von Si getrennt sind, und b 0, 1 oder 2 ist. R ist insbesondere ein Rest ohne funktionelle Gruppe, bevorzugt eine Alkylgruppe wie Methyl oder Ethyl. Vorzugsweise enthalten die Gruppen Rf 3 bis 25 und insbesondere 3 bis 18 Fluoratome, die an aliphatische Kohlenstoffatome gebunden sind. Rf ist vorzugsweise eine fluorierte Alkylgruppe mit 3 bis 20 C-Atomen und Beispiele sind CF₃CH₂CH₂-, C₂F₅CH₂CH₂-, n-C₆F₁₃CH₂CH₂-, i-C₃F₇OCH₂CH₂CH₂-, n-C₈F₁₇CH₂CH₂- und n-C₁₀F₂₁-CH₂CH₂-.

Beispiele für einsetzbare Fluorsilane sind CF₃CH₂CH₂SiCl₂(CH₃), CF₃CH₂CH₂SiCl(CH₃)₂, CF₃CH₂CH₂Si(CH₃)(OCH₃)₂, C₂F₅-CH₂CH₂-SiZ₃, n-C₆F₁₃-CH₂CH₂SiZ₃, n-C₈F₁₇-CH₂CH₂-SiZ₃, n-C₁₀F₂₁-CH₂CH₂-SiZ₃ mit (Z = OCH₃, OC₂H₅ oder Cl), i-C₃F₇O-CH₂CH₂CH₂-SiCl₂(CH₃), n-C₆F₁₃-CH₂CH₂-Si(OCH₂CH₃)₂, n-C₆F₁₃-CH₂CH₂-SiCl₂(CH₃) und n-C₆F₁₃-CH₂CH₂-SiCl(CH₃)₂.

Die Silane lassen sich nach bekannten Methoden herstellen; vgl. W. Noll, "Chemie und Technologie der Silicone", Verlag Chemie GmbH, Weinheim/Bergstrasse (1968).

Beispiele für Metallverbindungen, die über eine funktionelle Gruppe verfügen, sind Metallverbindungen eines Metalls M aus den Hauptgruppen III bis V und/oder den Nebengruppen II bis IV des Periodensystems der Elemente. Bevorzugt sind Verbindungen von Al, Ti oder Zr. Beispiele hierfür sind R_{c}MX_{4-c} (M = Ti oder Zr und c = 1, 2, 3), wobei X und R wie vorstehend in Formel (I) definiert sind, wobei ein R oder mehrere R zusammen auch für einen Komplexbildner, wie z.B. eine ss-Dicarbonylverbindung oder eine (Mono)carbonsäure, stehen können. Bevorzugt sind Zirconium- und Titantetraalkoholate, bei denen ein Teil der Alkoxygruppen durch einen Komplexbildner, wie z.B. eine ss-Dicarbonylverbindung oder eine Carbonsäure, bevorzugt eine Monocarbonsäure, ersetzt worden ist.

Die erfindungsgemäss verwendeten Substanzen können in jeder beliebigen Reihenfolge miteinander gemischt werden. Die Mischung kann unmittelbar in der Zerkleinerungsmaschine oder vorher in einem gesonderten Behälter, z.B. einem Mischer, erfolgen. Vorzugsweise werden ansonsten keine weiteren Additive zugegeben, d.h. die der Reaktivzerkleinerung zu unterwerfenden Mischung besteht aus mindestens einem Dispergiermittel, mindestens einem Modifizierungsmittel, welches im Sonderfall mit dem Dispergiermittel übereinstimmen kann, und den Partikeln, bei denen es sich vorzugsweise um Partikel aus nur einem Material handelt. Beispiele für Additive, die gegebenenfalls zugemischt werden, sind Entschäumer, Presshilfsmittel, organische Bindemittel, Photokatalysatoren, Konservierungsmittel und rheologische Additive. Die Zugabe von Additiven ist nur notwendig, wenn diese für die Weiterverarbeitung benötigt werden. Daher können diese Additive auch nach der erfindungsgemässen Bearbeitung zugegeben werden. Ein Vorteil für eine vorherige Zugabe kann in der durch das Mahlen erhaltenen homogenen Mischung liegen.

Bei der Durchführung des erfindungsgemässen Verfahrens hängt der Gehalt an Partikeln stark von der Partikelart ab, beträgt aber im allgemeinen bis zu 60 Vol.-% der Suspension, gewöhnlich beträgt er zwischen 50 und 0,5 Vol.-%, vorzugsweise zwischen 30 und 1 Vol.-% und insbesondere zwischen 25 und 2,5 Vol.-% der Dispersion. Der Rest der Suspension setzt sich aus Dispergiermittel und Modifizierungsmittel zusammen. Dabei beträgt das Gewichtsverhältnis Partikel/Modifizierungsmittel im allgemeinen 100:1 bis 100:35, insbesondere 100:2 bis 100:25 und besonders bevorzugt 100:4 bis 100:20.

Das im Mahlraum vorliegende Mengenverhältnis Partikel/Mahlkörper ergibt sich zwangsläufig aus dem Feststoffgehalt der Suspension und dem verwendeten Füllgrad an Mahlkugeln und der Schüttdichte der Mahlkugeln.

Die mechanische Zerkleinerung findet im allgemeinen in Mühlen, Knetern, Walzenstühlen oder auch z.B. in Düsenstrahldispergatoren statt. Geeignete Zerkleinerungsmaschinen für die mechanische Zerkleinerung sind beispielsweise Homogenisatoren, Turborührer, Mühlen mit losen Mahlwerkzeugen, wie Kugel-, Stab-, Trommel-, Konus-, Rohr-, Autogen-, Planeten-, Schwing- und Rührwerksmühlen, Scherwalzenkneter, Mörsermühlen, Kolloidmühlen und Walzenstühle. Die Zerkleinerung, die z. B. aus Mahlen und Homogenisieren bestehen kann, wird bevorzugt bei Raumtemperatur ausgeführt. Die Dauer hängt von der Art der Mischung und der verwendeten Zerkleinerungsmaschine ab.

Bevorzugt werden Mühlen mit losen Mahlwerkzeugen verwendet. Die Mahlwerkzeuge oder Mahlkörper sind z.B. Kugeln, Stäbe oder kurze Zylinderstücke. Der Behälter führt z.B. eine Dreh-, Planeten- oder Schüttelbewegung aus oder die Mahlkörper werden mit einem Rührwerk bewegt.

Besonders bevorzugte Mühlen sind Rührwerkskugelmühlen mit einem sich bewegenden Rührwerk und Mahlkugeln als Mahlkörper.

Bevorzugt werden Mühlen mit sehr kleinen Mahlkörpern verwendet, wodurch man in der Lage ist, kleindimensionierte Scherkräfte aufzubringen. Für den Feinstdispergierschritt werden vorzugsweise Mahlkörper mit einem Durchmesser von nicht mehr als 2,5 mm, bevorzugter nicht mehr als 1,5 mm und besonders bevorzugt nicht mehr als 1,0 mm und nicht kleiner als 0,05 mm, bevorzugter nicht kleiner als 0,07 mm und besonders bevorzugt nicht kleiner als 0,09 mm verwendet. Die Mahlkörper bestehen gewöhnlich aus Stahl, Kunststoff, Hartmetall, Al₂O₃, Achat, Zirconiumsilicat, ZrO₂, Y-ZrO₂, Ce-ZrO₂, Mg-ZrO₂, Glas, SiC, SiN oder Mischungen dieser Materialien, besonders bevorzugte Mahlkörpermaterialien sind stabilisierte Zirconiumoxide, Zirconsilicat und Stahl.

Die Zerkleinerung kann auch in einem zwei- oder mehrstufigen Verfahren erfolgen. Sie kann z.B. aus einer vorgeschalteten Zerkleinerung (Vorzerkleinerung) und einer anschliessenden Feinstzerkleinerung bestehen, wobei das Modifizierungsmittel in jeder Stufe oder nur in mindestens einer Stufe, z.B. der letzten, vorhanden sein kann. Z.B. kann beim Mahlen mit Mahlkörpern ein Mahlschritt mit gröberen Mahlkörpern vorgeschaltet werden, um die optimale, effiziente Ausgangspartikelgrösse für den Feinstzerkleinerungsschritt zu erreichen.

Die bevorzugte Partikelgrösse (mittlerer Durchmesser oder mittlere kleinste Dimension) für den Feinstzerkleinerungsprozess beträgt 30 bis 1.000 nm, bevorzugt 50 bis 500 nm und besonders bevorzugt 60 bis 150 nm.

In Abhängigkeit von der Bauart der verwendeten Zerkleinerungsmaschine, insbesondere einer Mühle, werden z.B. Füllgrade von 50 bis 100% von Mahlkörpern verwendet, bevorzugt sind Füllgrade von 60 bis 98%, besonders bevorzugt von 70 bis 95%.

Der Zerkleinerungsprozess in Rührwerkskugelmühlen erfolgt z.B. bei Drehzahlen des Rührwerks von 900 bis 5.000 U/min, bevorzugt sind Drehzahlen von 1.000 bis 4.500 U/min, besonders bevorzugt Drehzahlen von 2.000 - 4.200 U/min.

Die Mahldauer hängt insbesondere von der Art der eingesetzten Partikel ab, sie kann mehreren Minuten bis hin zu Tagen betragen, z.B. 10 Minuten bis 5 Tage, bevorzugt zwischen 1 Stunde und 12 Stunden.

Die Reaktivzerkleinerung kann unterstützt werden durch zusätzlichen Energieeintrag (neben der einwirkenden mechanischen Energie) z.B. mittels Mikrowelle und/oder Ultraschall, wobei diese beiden Methoden auch gleichzeitig eingesetzt werden können. Der Energieeintrag in die Dispersion erfolgt besonders bevorzugt direkt in der Zerkleinerungsmaschine, kann aber auch ausserhalb der Zerkleinerungsmaschine im Produktkreislauf erfolgen.

Das erfindungsgemässe Verfahren wird vorzugsweise bei einer Temperatur von Raumtemperatur (ca. 20°C) bis zur Siedetemperatur des Dispergiermediums durchgeführt. Durch geeignete Temperierung (Kühlung) des Mahlraums der Mühle sind diese entsprechenden Arbeitstemperaturen einstellbar.

Das Verfahren kann sowohl kontinuierlich im Einpassagenbetrieb, Mehrpassagenbetrieb (Pendelverfahren) oder Kreisverfahren als auch diskontinuierlich im Batchbetrieb durchgeführt werden.

Durch die Reaktivzerkleinerung nach der Erfindung wird Modifizierungsmittel chemisch an die zerkleinerten Partikel gebunden. Dabei wird zumindest ein Teil der eingesetzten Modifizierungsmittelmoleküle an die Partikel gebunden. Der Anteil, der chemisch gebunden wird, hängt z.B. von der Art der Partikel, der eingesetzten Menge im Verhältnis zu den Partikeln, der erhaltenen Grösse und damit der zur Verfügung stehenden Oberfläche der Partikel ab.

Durch die erfindungsgemässe Kombination des Einsatzes von Modifizierungsmitteln und einer mechanischen Zerkleinerung können Funktionskolloide erzeugt werden, die fest an die Kolloidpartikel gebundene, chemische Komponenten aufweisen. Hiermit wird es möglich, Kolloidpartikel mit einer kleinsten Dimension sogar bis hinunter in einen Bereich von 0,01 bis 0,002 µm herzustellen.

Die mittlere kleinste Dimension (mittlerer Durchmesser, mittlere Höhe oder Breite) der durch das erfindungsgemässe Verfahren hergestellten Partikel soll nicht mehr als 0,2 µm, vorzugsweise nicht mehr als 0,1 µm und besonders bevorzugt nicht mehr als 0,05 µm betragen. Die Zerkleinerung kann nach Bedarf sogar Partikel mit einer mittleren kleinsten Dimension bis zu nicht mehr als 0,01 und sogar nicht mehr als 0,002 µm ergeben.

Die mittlere kleinste Dimension ist z.B. für sphärische Partikel der mittlere Partikeldurchmesser und für plättchenförmige Partikel die mittlere Höhe. Unter dem mittleren Partikeldurchmesser wird in der vorliegenden Beschreibung der d₅₀-Wert der Volumenverteilung verstanden. Dem Fachmann sind Verfahren zu Bestimmung dieser Partikelgrössen sowie die Einzelheiten zu diesen Verfahren bekannt. Beispiele für geeignete Messverfahren sind dynamische Laserlichtstreuung (z.B. mit einem Ultrafein-Partikelanalysator (UPA)), Röntgenscheibenzentrifuge oder quantitative Bildanalyse an elektronenmikroskopischen Aufnahmen.

Falls gewünscht, können aus dem erhaltenen Funktionskolloid durch Entfernen des Dispergiermittels die Funktionskolloidpartikel gewonnen werden, die als Pulver einsetzbar sind. Zur Entfernung kann jedes dem Fachmann bekannte Verfahren eingesetzt werden, z.B. Abdampfen, Zentrifugieren oder Filtrieren. Eine andere Möglichkeit zur Abtrennung besteht darin, durch dem Fachmann bekannte Verfahren den isoelektrischen Punkt einzustellen, um eine Flockulation zu erhalten, die dann abfiltriert werden kann. Auf den erhaltenen Funktionskolloidpartikeln befinden sich auf der Oberfläche die chemisch gebundenen Modifizierungsmittelmoleküle, durch deren Funktionalität man die Eigenschaften der Partikel steuern kann. Die Kolloidpartikel können anschliessend wieder in demselben oder einem anderen geeigneten Dispergiermittel aufgenommen werden, wobei sich keine oder eine relativ geringe Aggregation zeigt, so dass der mittlere Partikeldurchmesser im wesentlichen beibehalten werden kann.

Die Funktionskolloide oder die Funktionskolloidpartikel können durch dem Fachmann bekannte Methoden weiter aufgearbeitet werden. Es kann z.B. mit anderen Oberflächenmodifikatoren umgesetzt werden, es kann in organischen oder wässrigen Lösungsmitteln dispergiert werden und lösliche Polymere, Oligomere oder organische Monomere oder Sole oder Additive, z.B. die vorstehend genannten, können zugemischt werden. Solche Mischungen, Aufarbeitungen oder die erfindungsgemässen Funktionskolloide oder Funktionskolloidpartikel als solche können z.B. zur Herstellung von Beschichtungen oder für andere Anwendungen eingesetzt werden.

Beispiele für die Verwendung der Funktionskolloide, der Funktionskolloidpartikel oder von Mischungen, die diese Funktionskolloide oder Funktionskolloidpartikel umfassen, beinhalten die Herstellung von keramischen Formkörpern, Folien, Membranen und Beschichtungen, oder von Polymermatrixcompounds. Die Beschichtungen bzw. Schichten können für die unterschiedlichsten Zwecke dienen, z.B. als Beschichtungen mit Niederenergieoberflächen oder als abriebfeste, mikrobizide, photokatalytische, mikrostrukturierbare bzw. mikrostrukturierte, holographische, leitfähige, UV-absorbierende, photochrome und/oder elektrochrome Schichten.

Die folgenden Beispiele dienen der weiteren Erläuterung der vorliegenden Erfindung.

### Beispiele

Die Beispiele 1 bis 5 wurden mit einer Mühle (Drais Perl Mill PML-H/V) durchgeführt. Spezifikationen: Mahlraum Bruttovolumen: 1,2 l, Rührwerk, Mahlraumauskleidung und Mahlkörperabtrennung (Siebpatrone) aus Zirconiumoxid, Motorleistung Hauptantrieb 4,0 kW, Motordrehzahl Hauptantrieb 3.000 U/min, Rührwerksdrehzahl 900-4.100 U/min.

### BEISPIEL 1

In ein Reaktionsgefäss werden 600 ml Toluol, 50 g Talkumpulver (<10 Mikron, BET-Oberfläche 14 m²/g) und 5 g Methyltrimethoxysilan gegeben und 30 min unter Rühren gemischt. Die erhaltene Mischung wird in eine Rührwerkskugelmühle gefüllt, die 1.300 g Mahlkugeln (Zirconiumsilicat, Kugeldurchmesser 0,6 - 1,0 mm) enthält. Es wird bei 4,000 U/min 4 h gemahlen. Danach wird die Mühle mit 2 I Toluol entleert. Das Lösungsmittel wird durch Zentrifugieren entfernt (4.000 U/min, 15 min). Das verbleibende Pulver wird bei 130°C 24 h im Vakuumtrockenschrank getrocknet und besitzt eine BET-Oberfläche von 200 m²/g.

### BEISPIEL 2

In ein Reaktionsgefäss werden 600 ml Toluol, 50 g Talkumpulver (<10 Mikron, BET-Oberfläche 14 m²/g) und 7,2 g Phenyltrimethoxysilan gegeben und 30 min unter Rühren gemischt. Die erhaltene Mischung wird in eine Rührwerkskugelmühle gefüllt, die 1.300 g Mahlkugeln (Zirconiumsilicat, Kugeldurchmesser 0,6 - 1,0 mm) enthält. Es wird bei 4,000 U/min 4 h gemahlen. Danach wird die Mühle mit 2 I Toluol entleert. Das Lösungsmittel wird durch Zentrifugieren entfernt (4.000 U/min, 15 min). Das verbleibende Pulver wird bei 130°C 24 h im Vakuumtrockenschrank getrocknet und besitzt eine BET-Oberfläche von 194 m²/g.

### BEISPIEL 3

In ein Reaktionsgefäss werden 600 ml Toluol, 50 g Talkumpulver (<10 Mikron, BET-Oberfläche 14 m²/g) und 8,9 g Methylacrylsäure[3-trimethoxysilylpropylester] gegeben und 30 min unter Rühren gemischt. Die erhaltene Mischung wird in eine Rührwerkskugelmühle gefüllt, die 1.300 g Mahlkugeln (Zirconiumsilicat, Kugeldurchmesser 0,6 - 1,0 mm) enthält. Es wird bei 4.000 U/min 4 h gemahlen. Danach wird die Mühle mit 2 I Toluol entleert. Das Lösungsmittel wird durch Zentrifugieren entfernt (4.000 U/ min, 15 min). Das verbleibende Pulver wird bei 130°C 24 h im Vakuumtrockenschrank getrocknet und besitzt eine BET-Oberfläche von 153 m²/g.

### BEISPIEL 4

In ein Reaktionsgefäss werden 600 ml Toluol, 50 g Talkumpulver (<10 Mikron, BET-Oberfläche 14 m²/g) und 5 g 2-[Methoxy(polyethylenoxy)propyl]trimethoxysilan gegeben und 30 min unter Rühren gemischt. Die erhaltene Mischung wird in eine Rührwerkskugelmühle gefüllt, die 1.300 g Mahlkugeln (Zirconiumsilicat, Kugeldurchmesser 0,6 - 1,0 mm) enthält. Es wird bei 4.000 U/min 4 h gemahlen. Danach wird die Mühle mit 2 I Toluol entleert. Das Lösungsmittel wird durch Zentrifugieren entfernt (4.000 U/min, 15 min). Das verbleibende Pulver wird bei 130°C 24 h im Vakuumtrockenschrank getrocknet und besitzt eine BET-Oberfläche von 101 m²/g.

### VERGLEICHSBEISPIEL

In ein Reaktionsgefäss werden 600 ml Toluol und 50 g Talkumpulver (<10 Mikron, BET-Oberfläche 14 m²/g) gegeben und 30 min unter Rühren gemischt. Die erhaltene Mischung wird in eine Rührwerkskugelmühle gefüllt, die 1.300 g Mahlkugeln (Zirconiumsilicat, Kugeldurchmesser 0,6 - 1,0 mm) enthält. Es wird bei 4.000 U/min 4 h gemahlen. Danach wird die Mühle mit 2 I Toluol entleert. Das Lösungsmittel wird durch Zentrifugieren entfernt (4.000 U/min, 15 min). Das verbleibende Pulver wird bei 130°C 24 h im Vakuumtrockenschrank getrocknet und besitzt eine BET-Oberfläche von 18 m²/g.

### BEISPIEL 5

In ein Reaktionsgefäss werden 1.350 ml Toluol, 150 g Talkumpulver (<10 Mikron, BET-Oberfläche 14 m²/g) und 15 g Methacrylsäure[3-trimethoxysilylpropylester] gegeben und 30 min unter Rühren gemischt. Die erhaltene Mischung wird durch eine zu 90% mit Mahlkugeln (Zirconiumoxid, Kugeldurchmesser 0,4 mm) gefüllte Rührwerkskugelmühle (Netzsch LabStar LS1) kontinuierlich gepumpt. Es wird bei 3.000 U/min 2 h gemahlen. Danach wird die Mühle mit 2 I Toluol entleert. Das Lösungsmittel wird durch Zentrifugieren entfernt (4.000 U/min, 15 min). Das verbleibende Pulver wird bei 130°C 24 h im Vakuumtrockenschrank getrocknet und besitzt eine BET-Oberfläche von 180 m²/g.

### BEISPIEL 6

In ein Reaktionsgefäss werden 1.000 ml destilliertes Wasser, 400 g Zirconiumoxid (BET-Oberfläche 150 ± 10 m²/g) und 60 g 3,6,9-Trioxadecansäure gegeben und 30 min unter Rühren gemischt. Die erhaltene Mischung wird in einer Rührwerkskugelmühle 4 h gemahlen (Drais Perl Mill PML-H/V, Zirconiumoxid Mahlraumauskleidung, Mahlraumvolumen brutto 1,2 I, 4.100 U/min, 1.700 g Mahlkugeln, Zirconiumsilicat, Kugeldurchmesser 0,3 - 0,4 mm, kontinuierlicher Betrieb im Kreisverfahren). Das so erhaltene Kolloid enthält Partikel mit einem mittleren Partikeldurchmesser von d₅₀ = 0,0118 µm (UPA).

### BEISPIEL 7

In ein Reaktionsgefäss werden 880 ml destilliertes Wasser, 800 g Zirconiumoxid (BET-Oberfläche 150 ± 10 m²/g) und 120 g 3,6,9-Trioxadecansäure gegeben und 30 min unter Rühren gemischt. Die erhaltene Mischung wird in einer Rührwerkskugelmühle 4,5 h gemahlen (Drais Perl Mill PML-H/V, Zirconiumoxid Mahlraumauskleidung, Mahlraumvolumen brutto 1,2 I, 4.100 U/min, 1.700 g Mahlkugeln, Zirconiumsilicat, Kugeldurchmesser 0,3 - 0,4 mm, kontinuierlicher Betrieb im Kreisverfahren). Das so erhaltene Kolloid enthält Partikel mit einem mittleren Partikeldurchmesser von d₅₀ = 0,0123 µm (UPA).

### BEISPIEL 8

In ein Reaktionsgefäss werden 150 ml destilliertes Wasser, 1.500 ml i-Propanol, 800 mg Zirconiumoxid (BET-Oberfläche 150 ± 10 m²/g), 40 g 3,6,9-Trioxadecansäure und 38,6 g Methacrylsäure gegeben und 30 min unter Rühren gemischt. Die erhaltene Mischung wird in einer Rührwerkskugelmühle 4,5 h gemahlen (Drais Perl Mill PML-H/V, Zirconiumoxid Mahlraumauskleidung, Mahlraumvolumen brutto 1,2 I, 4.100 U/min, 1.700 g Mahlkugeln, Zirconiumsilicat, Kugeldurchmesser 0,3 - 0,4 mm, kontinuierlicher Betrieb im Kreisverfahren). Das so erhaltene Kolloid enthält Partikel mit einem mittleren Partikeldurchmesser von d₅₀ = 0,0110 µm (UPA).

### BEISPIEL 9

In ein Reaktionsgefäss werden 800 ml destilliertes Wasser, 400 g Zirconiumoxid (Degussa, ZrO₂-VP, BET-Oberfläche 40 ± 10 m²/g (Firmenangabe), Pulver gewaschen) und 60 g 3,6,9-Trioxadecansäure gegeben und 30 min unter Rühren gemischt. Die erhaltene Mischung wird in einer Rührwerkskugelmühle 4,5 h gemahlen (Drais Perl Mill PML-H/V, Zirconiumoxid Mahlraumauskleidung, Mahlraumvolumen brutto 1,2 I, 4.100 U/min, 1.700 g Mahlkugeln, Zirconiumsilicat, Kugeldurchmesser 0,3 - 0,4 mm, kontinuierlicher Betrieb im Kreisverfahren). Das so erhaltene Kolloid enthält Partikel mit einem mittleren Partikeldurchmesser von d₅₀ = 0,023 µm (UPA), BET-Oberfläche 75 m²/g.

### BEISPIEL 10

In ein Reaktionsgefäss werden 800 ml destilliertes Wasser, 400 g Zirconiumoxid (Tosoh, ZrO₂/TZ-O, BET-Oberfläche 14 m²/g (Firmenangabe)) und 60 g 3,6,9-Trioxadecansäure gegeben und 30 min unter Rühren gemischt. Die erhaltene Mischung wird in einer Rührwerkskugelmühle gemahlen (Drais Perl Mill PML-H/V, Zirconiumoxid Mahlraumauskleidung, Mahlraumvolumen brutto 1,2 I, 4.100 U/min, 1.700 g Mahlkugeln, Zirconiumsilicat, Kugeldurchmesser 0,3 - 0,4 mm, kontinuierlicher Betrieb im Kreisverfahren). Das so erhaltene Kolloid enthält Partikel mit einem mittleren Partikeldurchmesser von d₅₀ = 0,073 µm (UPA), BET-Oberfläche 48 m²/g.

### BEISPIEL 11

In ein Reaktionsgefäss werden 1.180 ml destilliertes Wasser, 800 g Aluminiumoxid (Sumitomo, AKP53, BET-Oberfläche 9 - 15 m²/g (Firmenangabe)) und 40 g 3,6,9-Trioxadecansäure gegeben und 14 h unter Rühren gemischt. Die erhaltene Mischung wird in einer Rührwerkskugelmühle 12 h gemahlen (Drais Perl Mill PML-H/V, Zirconiumoxid Mahlraumauskleidung, Mahlraumvolumen brutto 1,2 I, 4.100 U/min, 1.700 g Mahlkugeln, Zirconiumsilicat, Kugeldurchmesser 0,3 - 0,4 mm, kontinuierlicher Betrieb im Kreisverfahren). Nach 4 h und 5,5 h werden jeweils 20 g 3,6,9-Trioxadecansäure zugesetzt. Das so erhaltene Kolloid weist eine BET-Oberfläche von 54 m²/g auf, d₅₀ = 0,044 µm (Röntgenscheibenzentrifuge).

### BEISPIEL 12

In ein Reaktionsgefäss werden 1.035 ml Ethanol, 201 g Titandioxid (Sachtleben, Hombitec RM300, BET-Oberfläche 60 m²/g (Firmenangabe), Pulver gewaschen) 20,16 g APTES und 4,8 ml destilliertes Wasser gegeben und 5 min unter Rühren gemischt. Die erhaltene Mischung wird in einer Rührwerkskugelmühle 4 h gemahlen (Drais Perl Mill PML-H/V, Zirconiumoxid Mahlraumauskleidung, Mahlraumvolumen brutto 1,2 I, 4.100 U/min, 1.700 g Mahlkugeln, Zirconiumsilicat, Kugeldurchmesser 0,3 - 0,4 mm, kontinuierlicher Betrieb im Kreislaufverfahren). Durch anschliessenden Lösungsmittelabtausch durch Zentrifugieren und zweimaliges Waschen mit destilliertem Wasser (pH = 7) erhält man nach Redispergieren in Wasser mit pH 4,5 ein Kolloid mit einem mittleren Partikeldurchmesser von d₅₀ = 0,063 (UPA), BET-Oberfläche 99 m²/g.

## Patentansprüche

1. Verfahren zur chemomechanischen Oberflächenmodifizierung von Partikeln, **dadurch gekennzeichnet, dass** Partikel in einem Dispergiermittel in Anwesenheit eines Modifizierungsmittels einer mechanischen Beanspruchung ausgesetzt werden, wobei das Modifizierungsmittel zumindest teilweise an die mechanisch beanspruchten Partikel chemisch gebunden wird.

2. Verfahren zur chemomechanischen Oberflächenmodifizierung von Partikeln nach Anspruch 1, **dadurch gekennzeichnet, dass** die Scherkräfte durch eine Mühle mit losen Mahlkörpern erzeugt werden.

3. Verfahren zur chemomechanischen Oberflächenmodifizierung von Partikeln nach Anspruch 2, **dadurch gekennzeichnet, dass** Mahlkörper mit einem Durchmesser von nicht mehr als 2,5 mm verwendet werden.

4. Verfahren zur chemomechanischen Oberflächenmodifizierung von Partikeln nach Anspruch 1, **dadurch gekennzeichnet, dass** für die Zerkleinerung ein Dispergator nach den Düsenstrahlprinzip verwendet wird.

5. Verfahren zur chemomechanischen Oberflächenmodifizierung von Partikeln nach einem der Ansprüche 1 bis 4, **dadurch gekennzeichnet, dass** das Modifizierungsmittel kovalent, ionisch oder koordinativ oder über Wasserstoffbrücken an die Kolloidpartikel gebunden wird.

6. Verfahren zur chemomechanischen Oberflächenmodifizierung von Partikeln nach einem der Ansprüche 1 bis 5, **dadurch gekennzeichnet, dass** das Modifizierungsmittel ein Molekulargewicht von nicht mehr als 500 aufweist.

7. Verfahren zur chemomechanischen Oberflächenmodifizierung von Partikeln nach Anspruch 1 bis 6, **dadurch gekennzeichnet, dass** die gebildeten Partikel eine mittlere kleinste Dimension von nicht mehr als 0,2 µm aufweisen.

8. Verfahren zur chemomechanischen Oberflächenmodifizierung von Partikeln nach einem der Ansprüche 1 bis 7, **dadurch gekennzeichnet, dass** das Modifizierungsmittel in dem Dispergiermittel keine grenzflächenaktiven Eigenschaften aufweist.

9. Verfahren zur chemomechanischen Oberflächenmodifizierung von Partikeln nach einem der Ansprüche 1 bis 8, **dadurch gekennzeichnet, dass** das Modifizierungsmittel ein Silan, eine Carbonsäure, ein Ester, eine Aminocarbonsäure oder ein Amin ist.

10. Verfahren zur chemomechanischen Oberflächenmodifizierung von Partikeln nach einem der Ansprüche 1 bis 9, **dadurch gekennzeichnet, dass** das Modifizierungsmittel auch als Dispergierrnittel verwendet wird.

11. Verfahren zur chemornechanischen Oberflächenmodifizierung von Partikeln nach einem der Ansprüche 1 bis 10, **dadurch gekennzeichnet, dass** die Zerkleinerung durch einen zusätzlichen Energieeintrag in die Dispersion unterstützt wird, wobei die zusätzliche Energie direkt in die Zerkleinerungsmaschine oder ausserhalb der Zerkleinerungsmaschine eingetragen wird.

12. Verfahren zur chemomechanischen Oberflächenmodifizierung von Partikeln nach Anspruch 11, **dadurch gekennzeichnet, dass** der zusätzliche Energieeintrag über Ultraschall und/oder über Mikrowellen erfolgt, wobei der zusätzliche Energieeintrag auch gleichzeitig über Ultraschall und Mikrowellen erfolgen kann.

13. Verfahren zur chemomechanischen Oberflächenmodifizierung von Partikeln, **dadurch gekennzeichnet, dass** man ein Funktionskolloid nach dem Verfahren eines der Ansprüche 1 bis 12 herstellt und das Dispergiermittel entfernt.

14. Oberflächenmodifizierte Partikel, erhältlich nach dem Verfahren eines der Ansprüche 1 bis 12.

15. Verwendung von oberflächenmodifizierten Partikeln nach Anspruch 14 oder von Mischungen, die diese oberflächenmodifizierten Partikel umfassen, für keramische Formkörper, Folien und Membranen, abriebfeste Beschichtungen, Beschichtungen mit Niederenergieoberflãchen, mikrobizide Beschichtungen, photokatalytische Beschichtungen, mikrostrukturierbare, holographische, leitfähige, UV-absorbierende, photochrome oder elektrochrome Schichten oder Polymerrnatrixcompounds.
